# EUROPÄISCHE PATENTSCHRIFT

(11) **EP 0 509 282 B1**
(45) Veröffentlichungstag und Bekanntmachung des Hinweises auf die Patenterteilung: **24.07.1996**
(21) Anmeldenummer: 92105178.5
(22) Anmeldetag: 26.03.1992
(51) Int. Cl.: C08K 5/18, C08L 77/06, C08G 69/26, C08G 69/36, C08K 3/32, C08L 77/00

(54) **Stabilisierte thermoplastische teilaromatische Polyamidformmassen**
Stabilized thermoplastic partly aromatic polyamide moulding compounds
Masses moulées stabilisées et thermoplastiques à partir de polyamides partiellement aromatiques

(30) Priorität: 16.04.1991 DE 4112324
(43) Veröffentlichungstag der Anmeldung: 21.10.1992
(73) Patentinhaber: BASF Aktiengesellschaft, 67063 Ludwigshafen (DE)
(72) Erfinder: Goetz, Walter, Dr., W-6700 Ludwigshafen (DE); Kopietz, Michael, Dr., W-6718 Gruenstadt (DE); Blinne, Gerd, Dr., W-6719 Bobenheim (DE)

(56) Entgegenhaltungen:
- EP-A- 0 166 321
- EP-A- 0 299 444
- EP-A- 0 489 437
- CA-A- 963 594
- FR-A- 1 584 621
- US-A- 3 384 615
- US-A- 3 644 280

## Beschreibung

Die Erfindung betrifft thermoplastische Formmassen, enthaltend
A) 40 - 99,9 Gew.-% eines teilaromatischen teilkristallinen Copolyamids mit einem Triamingehalt von unter 0,5 Gew.-% aufgebaut aus
   (A₁) 20 - 90 Gew.-% Einheiten, die sich von Terephthalsäure und Hexamethylmediamin ableiten,
   (A₂) 0 - 50 Gew.-% Einheiten, die sich von ε-Caprolactam ableiten
   (A₃) 0 - 80 Gew.-% Einheiten, die sich von Adipinsäure und Hexamethylendiamin ableiten,
   (A₄) 0 - 40 Gew.-% weiteren polyamidbildenden Monomeren
   wobei der Anteil der Komponenten (A₂) oder (A₃) oder (A₄) oder deren Mischungen mindestens 10 Gew.-% beträgt,
(B) 0,1 - 2 Gew.-% mindestens eines aromatischen, sekundären Amins und
(C) 100 - 2000 ppm mindestens einer phosphorhaltigen anorganischen Säure oder deren Derivate,
wobei sich der Gehalt der Komponente C) auf die Gesamtmenge der Komponenten A) und B) bezieht,
sowie darüber hinaus
(D) 0 - 59,9 Gew.-% eines faser- oder teilchenförmigen Füllstoffes oder deren Mischungen,
(E) 0 - 30 Gew.-% eines kautschukelastischen Polymeren.

Darüber hinaus betrifft die Erfindung die Verwendung derartiger teilaromatischer Copolyamide zur Herstellung von Fasern, Folien und Formkörpern und die aus diesen teilaromatischen Copolyamiden erhältlichen Formkörper.

Die Stabilisierung von Polyamiden gegen oxydativen und thermischen Abbau bestimmt im weiten Maße die Anwendungsmöglichkeiten dieser Polymeren. Meist erzielen diese Stabilisierungssysteme gleichzeitig einen ausreichenden Lichtschutz.

Aus der EP-A 281 691 und JP-A 63/142059 sowie DE-A 2 643 204 und DE-A 2 516 565 sind Stabilisatoren auf der Basis von Kupferiodid und Kaliumiodid für teilkristalline aliphatische Polyamide bekannt.

Eine weitere Möglichkeit zur Stabilisierung dieser teilkristallinen aliphatischen Polyamide mit sterisch gehinderten Phenolen ist aus der DE-A 2 522 833 bekannt. Die Kombination dieser Phenole mit anderen Verbindungen ist aus folgenden Schriften bekannt: DE-A 2 158 014 (phosphorhaltige Verbindungen) und NL-A 8 602 807 (aromatische Aminverbindungen).

Aus der GB-A 1 030 363 sind Stickstoffverbindungen in Kombination mit Übergangsmetallaminkomplexen als Stabilisierungssystem für teilkristalline, aliphatische Polyamide bekannt.

Zusätzlich ist aus der JP-A 63/105 057 ein Stabilisierungssystem für teilaromatische jedoch amorphe Polyamide aus einer Kupferverbindung und phenolischen oder phosphorhaltigen Verbindungen gegebenenfalls mit Thioethern und Aminverbindungen bekannt.

Weiterhin ist aus der CA-A 963 594 für teilkristalline aliphatische Polyamide eine Stabilisatorkombination aus einem aromatischen Amin und einer phosphorhaltigen Verbindung bekannt.

Teilaromatische und teilkristalline Copolyamide weisen den Vorteil auf, daß sie eine höhere Wärmeformbeständigkeit besitzen und entsprechend bei höheren Temperaturen verarbeitet werden müssen. Insofern werden diese Polyamide meist dort verwendet, wo eine hohe Dauergebrauchstemperatur in Luft erforderlich ist (z.B. Elektrosektor).

Die bislang bekannten Stabilisatoren sind jedoch nicht für diese Polyamide verwendbar, da z. B. Kupferverbindungen den Abbau der Polyamide bei der Verarbeitung katalysieren. Phenolische Antioxidantien sind ebenfalls nicht geeignet, da bei der Verarbeitung im Extruder bei hohen Temperaturen eine Zersetzung dieser Verbindungen erfolgt.

Zudem verbleibt nur ein geringer Teil der Ausgangsmenge in der Formmasse selbst, da diese Verbindungen bei den für teilaromatische Copolyamide üblichen Verarbeitungstemperaturen zu flüchtig sind.

Aromatische Aminverbindungen weisen allgemein den Nachteil auf, daß zur Erzielung einer effektiven Stabilisierung relativ hohe Einsatzmengen erforderlich sind, so daß ihre Anwendung nicht wirtschaftlich ist. Zudem verschlechtern sie die mechanischen Eigenschaften der Polyamidformkörper.

Darüber hinaus besteht bei teilaromatischen, teilkristallinen Copolyamiden die Problematik, daß oxydative und thermische stabilisierung nicht mit einem ausreichenden Lichtschutz gekoppelt sind, da die aromatischen Anteile die Lichtbeständigkeit drastisch verschlechtern.

Aufgabe der vorliegenden Erfindung war es daher ein Stabilisierungssystem für teilaromatische, teilkristalline Copolyamide zur Verfügung zu stellen, welches bei den hohen Verarbeitungstemperaturen eine gute thermische und oxidative Stabilisierung gewährleistet.

Demgemäß wurden die eingangs definierten Formmassen gefunden. Bevorzugte Formmassen dieser Art sind den Unteransprüchen zu entnehmen.

Als Komponente A) enthalten die erfindungsgemäßen thermoplastischen Formmassen 40 bis 99,9, vorzugsweise 50 bis 99,5 und insbesondere 70 bis 99,7 Gew.-% eines teilaromatischen, teilkristallinen Copolyamids mit einem Triamingehalt von unter 0,5 Gew.-%, bevorzugt unter 0,3 Gew.-%, aufgebaut aus:
A₁) 20 - 90 Gew.-% Einheiten, die sich von Terephthalsäure und Hexamethylendiamin ableiten,
A₂) 0 - 50 Gew.-% Einheiten, die sich von ε-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
wobei der Anteil der Komponente (A₂) oder (A₃) oder (A₄) oder deren Mischungen mindestens 10 Gew.-% beträgt.

Die Komponente A₁) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte X₁ bis X₅ festgelegten Fünfecks liegt, wobei die Punkte X₁ bis X₅ folgendermaßen definiert sind:
- X₁: 40 Gew.-% Einheiten A₁)
60 Gew.-% Einheiten A₃)
- X₂: 60 Gew.-% Einheiten A₁)
40 Gew.-% Einheiten A₃)
- X₃: 80 Gew.-% Einheiten A₁)
5 Gew.-% Einheiten A₂)
15 Gew.-% Einheiten A₃)
- X₄: 80 Gew.-% Einheiten A₁)
20 Gew.-% Einheiten A₂)
- X₅: 50 Gew.-% Einheiten A₁)
50 Gew.-% Einheiten A₂)

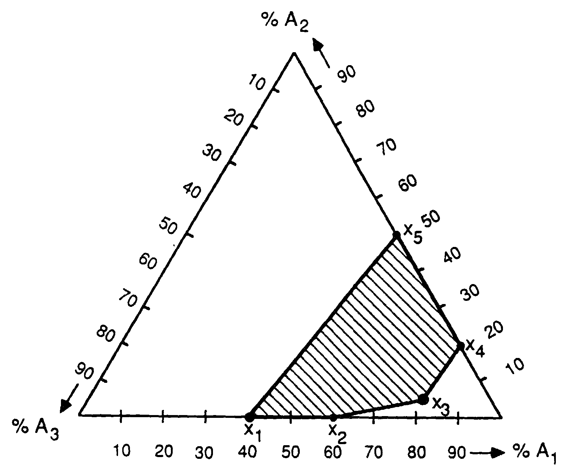

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen vorzugsweise 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphtalindicarbonsäure, Phenoxyterephthalsäure, wobei Isophtalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten

Enthält die Komponente (A₄) 4,4'-substituierte symmetrische Dicarbonsäuren, bei denen die Carboxylgruppen in para-Stellung stehen, so empfiehlt es sich, diese mit (A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Bei den teilaromatischen Copolyamide sollen erfindungsgemäß solche verstanden werden, die einen Kristallinitätsgrad > 10 %, bevorzugt > 15 %, und insbesondere > 20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Gemäß diesen Verfahren wird eine wäßrige Lösung der Monomeren, d.h. in diesem Fall der Monomeren, die die Einheiten A₁) bis A₄) bilden, unter erhöhtem Druck unter gleichzeitiger Verdampfung von Wasser und Bildung eines Präpolymeren auf eine Temperatur von 250 bis 300°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem überdruck von 1 bis 10 bar und einer Temperatur von 250 bis 300°C polykondensiert. Wesentlich ist bei dem Verfahren, daß die wäßrige Salzlösung unter einem überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die wäßrige Salzlösung wird vorteilhaft mit einer Temperatur von 50 bis 100°C kontinuierlich in eine Verdampferzone geleitet, wo die wäßrige Salzlösung unter einem überdruck von 1 bis 10, vorzugsweise von 2 bis 6 bar auf eine Temperatur von 250 bis 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.-%.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 bis 1,7 hat, wird in eine Polymerisationszone geleitet. In der Polymerisationszone wird die anfallende Schmelze bei einer Temperatur von 250 bis 330°C, insbesondere 270 bis 310°C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid, das in der Regel eine relative Viskosität von 1,2 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 bis 240°C, bis zur gewünschten Viskosität kondensiert. Vorteilhaft verwendet man hierfür den am Kopf der Kolonne anfallenden Wasserdampf.

Die relative Viskosität, gemessen in 1 Gew.-% Lösung in 96 Gew.-% H₂SO₄ bei 23°C, liegt nach der Festphasennachkondensation im allgemeinen im Bereich von 2,2 bis 5,0, vorzugsweise von 2,3 bis 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310°C vorteilhaft unter vermindertem Druck, z.B. von 1 bis 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben; wegen weiterer Einzelheiten sei auf die Schrift verwiesen.

Als Komponente A) können auch Mischungen verschiedener Copolyamide eingesetzt werden, wobei das Mischungsverhältnis beliebig ist.

Als Komponente B) enthalten die erfindungsgemäßen Formmassen mindestens ein aromatisches sekundäres Amin in Mengen von 0,1 bis 2, vorzugsweise 0,5 bis 1,5 und insbesondere 0,7 bis 1 Gew.-%, gemäß der allgemeinen Formel I: 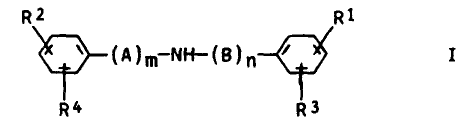 wobei
- m, n =: 0 oder 1
- A und B =: durch C₁-C₄-Alkyl oder Phenyl substituiertes tertiäres C-Atom
- R¹, R² =: Wasserstoff oder eine C₁-C₆-Alkylgruppe in ortho- oder para-Stellung, welcher gegebenenfalls substituiert sein kann durch 1 bis 3 Phenylreste, Halogen, Carboxylgruppe oder ein Übergangsmetallsalz dieser Carboxylgruppe und
- R³, R⁴ =: Wasserstoff oder ein Methylrest in ortho- oder para-Position, wenn m plus n für 1 steht oder eine tertiäre C₃-C₉-Alkylgruppe in ortho- oder para-Position, welche gegebenenfalls durch 1 bis 3 Phenylreste substituiert sein kann, wenn m plus n für 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-butyl, wobei die Methylgruppen vorzugsweise durch 1 bis 3 Phenylgruppen ersetzt sein können. Bevorzugte Halogene sind Chlor und Brom.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine B) sind
4,4'-bis(α,α'-tertiäroctyl)diphenylamin
4,4'-bis(α,α-dimethylbenzyl)diphenylamin
4,4'-bis(α-methylbenzhydryl)diphenylamin
4-(1,1,3,3-tetramethylbutyl)4'-triphenylmethyldiphenylamin
4,4'-bis(α,α-p-trimethylbenzyl)diphenylamin
2,4,4'-tris(α,α-dimethylbenzyl)diphenylamin
2,2'-dibromo,4,4'-bis(α,α-dimethylbenzyl)diphenylamin
4,4'-bis(α,α-dimethylbenzyl)-2-carboxydiphenylamine-nickel-4,4'-bis (α,α-dimethylbenzyl)-diphenylamin
2-sec-butyl-4,4'-bis(α,α-dimethylbenzyl)diphenylamin
4,4'-bis(α,α-dimethylbenzyl)-2-(α-methylheptyl)diphenylamin 2-(α-methylpentyl)4,4'-ditrityldiphenylamin
4-α,α-dimethylbenzyl-4'-isopropoxydiphenylamin
2-(α-methylheptyl)-4'-(α,α-dimethylbenzyl)diphenylamin
2-(α-methylpentyl)-4'-trityldiphenylamin
4,4'-bis(tertiary-butyl)diphenylamin
sowie:

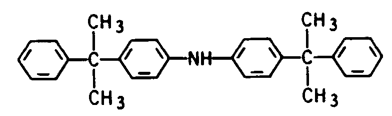

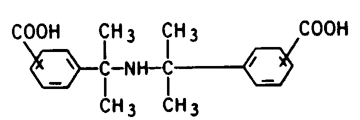

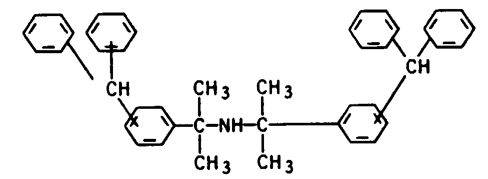

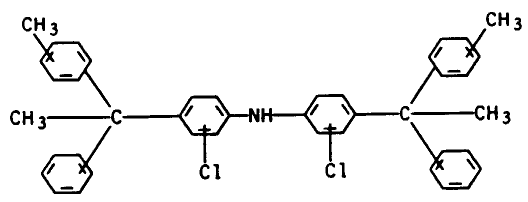

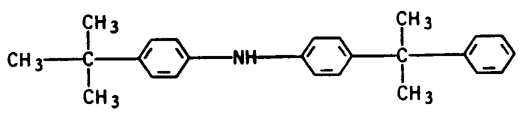

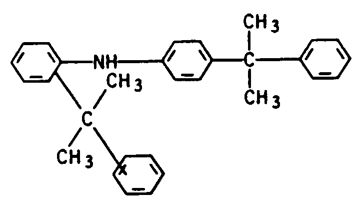

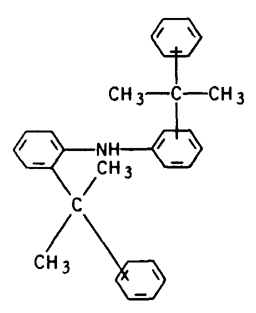

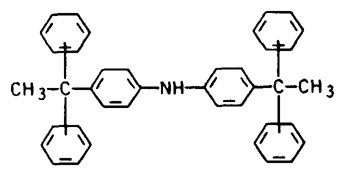

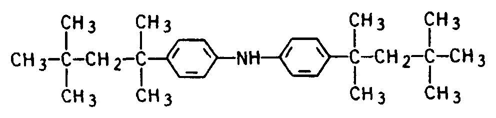

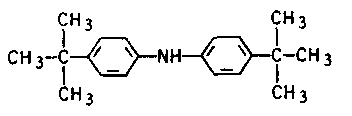

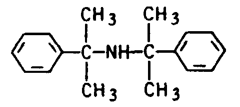

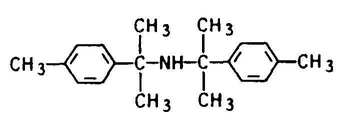

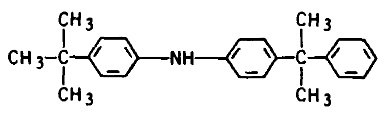

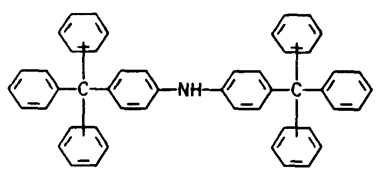

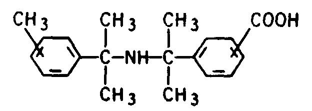

Die Herstellung erfolgt gemäß den in der BE-A 67/0500120 und CA-A 963594 beschriebenen Verfahren.

Bevorzugte sekundäre aromatische Amine sind Diphenylamin und dessen Derivate, welche als Naugard® (Firma Uniroyal) im Handel erhältlich sind.

Als Komponente C) enthalten die erfindungsgemäßen Formmassen 100 bis 2000, bevorzugt 200 - 500 und insbesondere 200 bis 400 ppm mindestens einer phosphorhaltigen anorganischen Säure oder deren Derivate, wobei sich der Gehalt der Komponente C auf die Gesamtmenge der Komponenten A) und B) in den Formmassen bezieht.

Bevorzugte Säuren sind hypophosphorige Säure, phosphorige Säure oder Phosphorsäure sowie deren Salze mit Alkalimetallen, wobei Natrium und Kalium besonders bevorzugt sind. Bevorzugte Mischungen sind insbesondere hypophosphorige und phosphorige Säure bzw. deren Alkalinmetallsalze im Verhältnis 3 : 1 bis 1 : 3. Unter organischen Derivaten dieser Säuren sollen vorzugsweise Esterderivate oben genannter Säuren verstanden werden.

Als Komponente D) können die erfindungsgemäßen Formmassen 0 bis 59,9, insbesondere 5 bis 50 und besonders bevorzugt 10 bis 35 Gew.-% eines faser- oder teilchenförmigen Füllstoffs oder Mischungen solcher Füllstoffe enthalten.

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt.

Bei der Verwendung von Glasfasern und Füllstoffen auf Silikatbasis können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6 - 20 µm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat, Magnesiumcarbonat (Kreide) und Titandioxid genannt, wovon Wollastonit, Titandioxid und Kaolin im allgemeinen bevorzugt werden.

Als Komponente E) können die erfindungsgemäßen thermoplastischen Formmassen 0 bis 30, vorzugsweise 5 bis 20 Gew.-%, bezogen auf die Summe der Komponenten A) bis E), eines kautschukelastischen Polymerisats enthalten.

Im allgemeinen handelt es sich dabei um Copolymerisate, die bevorzugt aus mindestens zwei der folgenden Monomeren als Hauptkomponenten aufgebaut sind: Ethylen, Propylen, Isobuten, Isopren, Chloropren, Vinylacetat, Styrol, Acrylnitril und Acryl- und Methacrylsäureestern mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen (EPM) bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI+4/100°C) solcher unvernetzten EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln II oder III oder IV oder V zum Monomerengemisch in den Kautschuk eingebaut

R₁C(COOR₂)=C(COOR₃)R₄ II

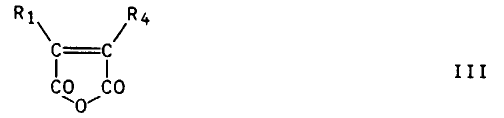

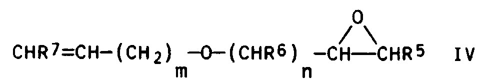

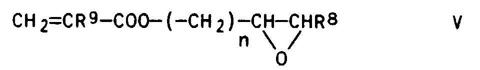

wobei R¹ bis R⁹ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste R¹ bis R⁷ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln II, III und V sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.-%, und der Anteil an Methacrylsäureestern zwischen 2 und 50 Gew.-%. Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus
- 50 bis 98,9: insbesondere 60 bis 95 Gew.-% Ethylen,
- 0,1 bis 40,: insbesondere 0,3 bis 20 Gew.-% Glycidylacrylat und/oder Glycidylmethacrylat, Acrylsäure und/oder Maleinsäureanhydrid,
und
- 1 bis 45,: insbesondere 10 bis 35 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190°C und 2,16 kg Belastung).

Bevorzugte Elastomere E) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 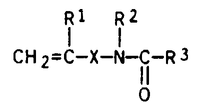 eingeführt werden können,
wobei die Substituenten folgende Bedeutung haben können:
- R¹: Wasserstoff oder eine C₁- bis C₄-Alkylgruppe,
- R²: Wasserstoff, eine C₁- bis C₈-Alkylgruppe oder eine Arylgruppe, insbesondere Phenyl,
- R³: Wasserstoff, eine C₁- bis C₁₀-Alkyl-, eine C₆-C₁₂-Arylgruppe oder -OR⁴,
- R⁴: eine C₁- bis C₈-Alkyl- oder C₆- bis C₁₂-Arylgruppe, die gegebenenfalls mit 0- oder N-haltigen Gruppen substituiert sein können,
- X: eine chemische Bindung, eine C₁- bis C₁₀-Alkylen- oder C₆- bis C₁₂-Arylengruppe oder 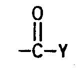
- Y: O-Z- oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Divinylbenzol, Diallylphthalat und Dihydrodicyclopentadienylacrylat sowie die in der EP-A 50 265 beschriebenen Verbindungen zu nennen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat und einer äußeren Hülle aus den vorstehend genannten Copolymeren und Copolymere von Ethylen mit Comonomeren, die reaktive Gruppen liefern.

Die beschriebenen Elastomere E) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden können.

Bevorzugt werden Kautschuke verwendet, die kein Butadien enthalten.

Neben den wesentlichen Komponenten A) bis C) sowie gegebenenfalls D) und E) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis E).

Übliche Zusatzstoffe sind beispielsweise UV-Stabilisatoren, Gleit- und Entformungsmittel, Färbemittel, Farbstoffe und Pigmente und Weichmacher sowie Flammschutzmittel.

Beispiele für UV-Stabilisatoren sind verschiedene substituierte Resorcine, Salicylate, Benzotriazole und Benzophenone, die im allgemeinen in Mengen bis zu 2,0 Gew.-% eingesetzt werden.

Gleit- und Entformungsmittel, die in der Regel in Mengen bis zu 1 Gew.-% der thermoplastischen Masse zugesetzt werden, sind Stearinsäuren, Stearylalkohol, Stearinsäurealkylester und -amide sowie Ester des Pentaerythrits mit langkettigen Fettsäuren.

Flammschutzmittel können im allgemeinen in Mengen bis zu 20 Gew.-% in den Formmassen enthalten sein. Es kommen hierbei alle für Polyamid bekannten Flammschutzzusätze in Betracht, bevorzugt ist jedoch elementarer roter oder schwarzer Phosphor.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 260 bis 350°C, vorzugsweise von 280 bis 340°C.

Die erfindungsgemäßen thermoplastischen Formmassen zeichnen sich gegenüber entsprechenden Formmassen auf der Basis aliphatischer oder amorpher Polyamide insbesondere durch eine hohe und über lange Zeiträume gleichbleibende Stabilität bei erhöhten Anwendungs- und Verarbeitungstemperaturen aus. Insbesondere ist die Schlagzähigkeit und helle Eigenfarbe dieser stabilisierten Copolyamide bei hohen Temperaturen über lange Zeiträume gleichbleibend. Im Vergleich zu stabilisierten Formkörpern aliphatischer Polyamide zeichnen sich die Formkörper der erfindungsgemäßen Formmassen durch eine wesentlich verbesserte Langzeitwirkung der Stabilisierung aus.

Aufgrund dieses Eigenschaftsspektrums eignen sich die erfindungsgemäßen Formmassen insbesondere zur Herstellung von Formkörpern, die hohen Dauergebrauchstemperaturen unterworfen werden. Insbesondere trifft dies für Anwendungen von Kraftfahrzeugbereichen zu, da Motorräume durch 5 kompakte Bauweise und zunehmende Schalldämmungsmaßnahmen (Isolierung) höhere Gebrauchstemperaturen der dort eingesetzten Polyamide voraussetzen.

### Beispiele

### Komponente A/1

Ein teilaromatisches Copolyamid aufgebaut aus
A₁) 70 Gew.-% Einheiten, die sich von Terephthalsäure und Hexamethylendiamin ableiten und
A₂) 30 Gew.-% Einheiten, die sich von ε-Caprolactam ableiten.

Die Viskositätszahl nach ISO 307 betrug 141 ml/g (gemessen in einer 0,5 gew.-%igen Lösung in 96 %iger Schwefelsäure bei 25°C).
Der Schmelzpunkt betrug: 298°C,
Glastemperatur: 113°C und
Kristallinität: 26 %.

### Komponente A/2

Ein teilaromatisches Copolyamid, aufgebaut aus
A₁) 60 Gew.-% Einheiten, die sich von Terephthalsäure und Hexamethylendiamin ableiten und
A₂) 40 Gew.-% Einheiten, die sich von ε-Caprolactam ableiten.
   - Viskositätszahl nach ISO 307 :: 137 ml/g
   - Schmelzpunkt :: 281°C
   - Glastemperatur :: 100°C
   - Kristallinität :: 13 %

### Komponente A/3

Ein teilaromatisches Copolyamid, aufgebaut aus
A₁) 50 Gew.-% Einheiten, die sich von Terephthalsäure und Hexamethylendiamin ableiten und
A₃) 50 Gew.-% Einheiten, die sich von Adipinsäure und Hexamethylendiamin ableiten.
   - Viskositätszahl nach ISO 307 :: 142 ml/g
   - Schmelzpunkt :: 292°C
   - Glastemperatur :: 91°C
   - Kristallinität :: 28 %

### Komponente A/V1

Polyhexamethylenadipinsäureamid
- Viskositätszahl nach ISO 307 :: 145 ml/g
- Schmelzpunkt :: 262°C
- Glastemperatur :: 55°C
- Kristallinität :: 43 %

### Komponente B/1

4,4'-Bis(α,α-dimethylbenzyl)diphenylamin (Naugard® 445, Firma Uniroyal)

### Komponente B/2

Reaktionsprodukt aus Diphenylamin und Aceton (Naugard® A, Firma Uniroyal)

### Komponente B/V1

Ein Stabilisator auf der Basis sterisch gehinderter Phenole (Irganox® 1098, Firma Ciba-Geigy)

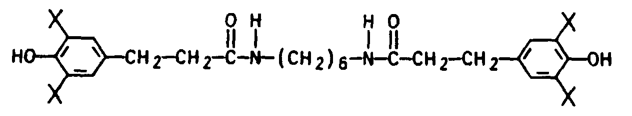

### Komponente C/1

NaH₂PO₂ × 5 H₂O (Handelsprodukt der Firma Merck)

### Komponente C/2

NaH₂PO₃ × 12 H₂O (Handelsprodukt der Firma Merck)

### Komponente C/3

NaH₂PO₄ × 1 H₂O (Handelsprodukt der Firma Merck)

### Komponente C/V1

Eine Mischung aus Kupferiodid und Kaliumiodid im Mischungsverhältnis 1 : 10.

### Komponente D

Glasfasern in Form von Schnittfasern mit einem mittleren Durchmesser von 10 µm und einer Länge von 4,5 mm; (Gevetex® P 537 der Firma Vetrotex)

### Herstellung der Formmassen

Die Komponenten A) bis C) sowie gegebenenfalls D) wurden auf einem Zweiwellenextruder (ZSK 30, Werner & Pfleiderer) bei 250 U/min und einem Durchsatz von 20 kg/h bei Temperaturen von 320°C konfektioniert verstrangt und im Wasserbad abgekühlt sowie granuliert. Das Granulat wurde getrocknet und bei 320°C zu Prüfkörpern verspritzt.

Die Bestimmung der Stabilität erfolgte durch Wärmelagerung der Prüfkörper bei 140 bzw. 160°C in Luft und anschließender Bestimmung der Lochkerbschlagzähigkeit aₖₗ nach DIN 53 753 (bei 23°C, trocken) in Abhängigkeit von der Lagerdauer. Aus diesen Kurven wurde als Meßgröße für die Effektivität des Stabilisatorsystems die Anzahl an Tagen (Lagerdauer) bestimmt, nach der die Lochkerbschlagzähigkeit unter 20 kJ/m² ("Restzähigkeit") absinkt. Im Falle der glasfaserverstärkten Formmassen erfolgte die Messung der Schlagzähigkeit nach Charpy (DIN 53 453) über den Zeitraum der Lagerung bis der Grenzwert von 20 kJ/m² erreicht wurde.

Die Zusammensetzungen der Formmassen und die Ergebnisse der Messungen sind den Tabellen zu entnehmen.

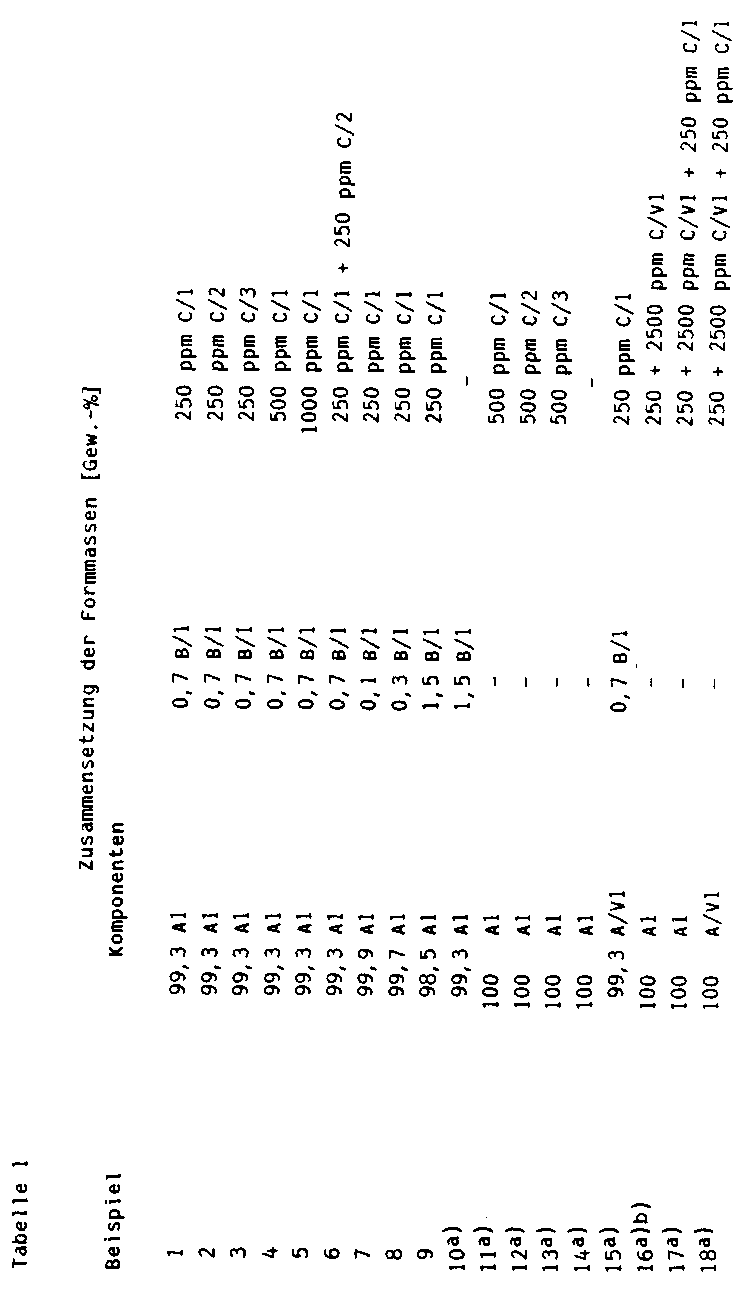

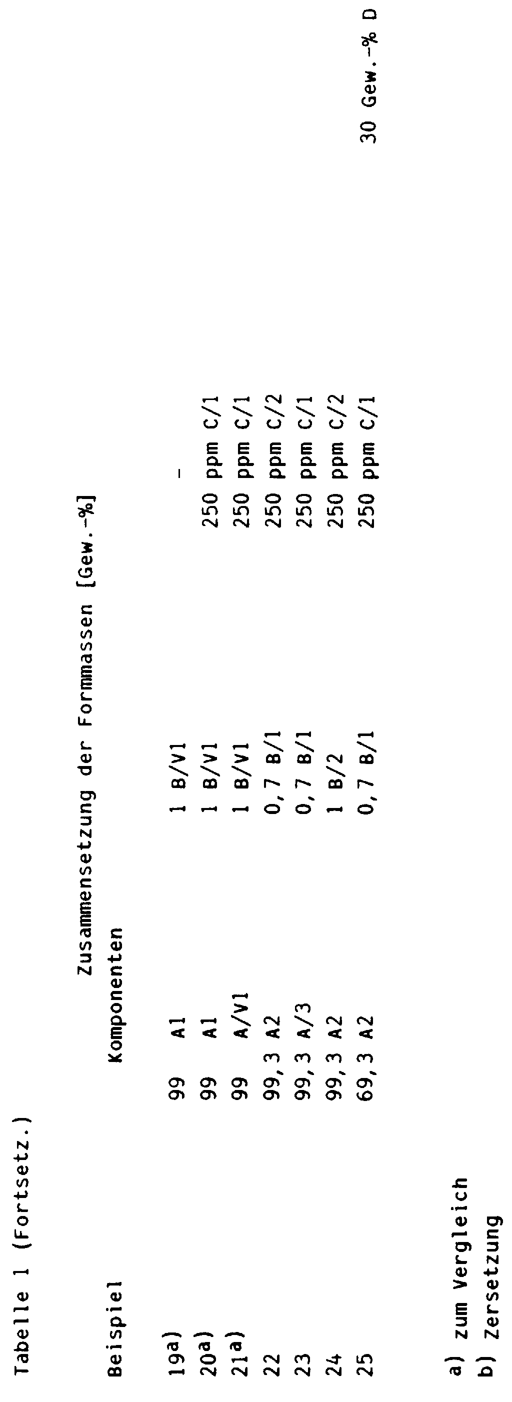

**Tabelle 2**

| Ergebnis der Messungen | | |
|---|---|---|
| Beispiel | Tage (T = 140°C) Rest aₖₗ = 20 kJ/m² | Tage (T = 160°C) aₖₗ = 20 kJ/m² |
| 1 | 48 | 12 |
| 2 | 72 | 15 |
| 3 | 60 | 15 |
| 4 | 52 | 12 |
| 5 | 52 | 15 |
| 6 | 85 | 20 |
| 7 | 20 | 5 |
| 8 | 31 | 7 |
| 9 | 50 | 10 |
| 10^{a)} | 8 | 3 |
| 11^{a)} | 4 | 1 |
| 12^{a)} | 4 | 1 |
| 13^{a)} | 3 | 1 |
| 14^{a)} | 2 | <1 |
| 15^{a)} | 35 | 9 |
| 16^{a)}^{b)} | 37 | 10 |
| 17^{a)} | 38 | 9 |
| 18^{a)} | 40 | 8 |
| 19^{a)} | 3 | 1 |
| 20^{a)} | 4 | 1 |
| 21^{a)} | 3 | 1 |
| 22 | 70 | 18 |
| 23 | 63 | 16 |
| 24 | 59 | 12 |
| 25 | 39 | 25 |

| | | |
|---|---|---|
| ^{a)} zum Vergleich | | |
| ^{b)} Zersetzung | | |

Die Ergebnisse der Messungen zeigen, daß bei gleichbleibender Menge des Stabilisators im Vergleich mit anderen Polyamiden eine wesentlich höhere Langzeitstabilität bei erhöhter Temperatur erzielt wird. Darüber hinaus zeigen die Messungen, daß Vergleichsstabilisatoren, die für aliphatische Polyamide gut geeignet sind, für teilaromatische Copolyamide keine effektive Stabilisierung bewirken.

## Patentansprüche

1. Thermoplastische Formmassen, enthaltend
A) 40 - 99,9 Gew.-% eines teilaromatischen teilkristallinen Copolyamids mit einem Triamingehalt von unter 0,5 Gew.-% aufgebaut aus
(A₁) 20 - 90 Gew.-% Einheiten, die sich von Terephthalsäure und Hexamethylmediamin ableiten,
(A₂) 0 - 50 Gew.-% Einheiten, die sich von ε-Caprolactam ableiten
(A₃) 0 - 80 Gew.-% Einheiten, die sich von Adipinsäure und Hexamethylendiamin ableiten,
(A₄) 0 - 40 Gew.-% weiteren polyamidbildenden Monomeren
wobei der Anteil der Komponenten (A₂) oder (A₃) oder (A₄) oder deren Mischungen mindestens 10 Gew.-% beträgt,
B) 0,1 bis 2 Gew.-% mindestens eines aromatischen, sekundären Amins
und
C) 100 - 2000 ppm mindestens einer phosphorhaltigen anorganischen Säure oder deren Derivate,
wobei sich der Gehalt der Komponente C) auf die Gesamtmenge der Komponenten A) und B) bezieht,
sowie darüber hinaus
D) 0 - 59,9 Gew.-% eines faser- oder teilchenförmigen Füllstoffes oder deren Mischungen,
E) 0 - 30 Gew.-% eines kautschukelastischen Polymeren.

2. Thermoplastische Formmassen nach Anspruch 1, enthaltend als Komponente B) ein aromatisches sekundäres Amin der allgemeinen Formel I 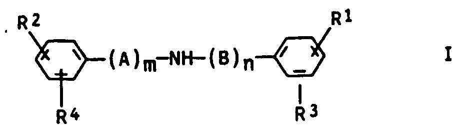 Zeichn.
wobei
m,n = 0 oder 1
A und B = durch C₁-C₄-Alkyl oder Phenyl substituiertes tertiäres C-Atom
R¹, R² = Wasserstoff oder eine C₁-C₆-Alkylgruppe in ortho- oder para-Stellung welcher gegebenenfalls substituiert sein kann durch ein bis 3 Phenylreste, Halogen, Carboxylgruppe oder ein Übergangsmetallsalz dieser Carboxylgruppe und
R³, R⁴ = Wasserstoff oder ein Methylrest in ortho- oder para-Position, wenn m plus n für 1 steht oder eine tertiäre C₃-C₉-Alkylgruppe in ortho- oder para-Position, welche gegebenenfalls durch 1 bis 3 Phenylreste substituiert sein kann, wenn m plus n für 0 oder 1 steht,
bedeuten.

3. Thermoplastische Formmassen nach den Ansprüchen 1 und 2, in denen die Komponente C) aus hypophosphoriger Säure, phosphoriger Säure, Phosphorsäure deren Alkalimetallsalzen oder deren Mischungen aufgebaut ist.

4. Thermoplastische Formmassen nach den Ansprüchen 1 bis 3, dadurch gekennzeichnet, daß die teilaromatischen Copolyamide A)
A₁) 50 - 80 Gew.-% Einheiten, die sich von Terephthalsäure und Hexamethylendiamin ableiten, und
A₂) 20 - 50 Gew.-% Einheiten, die sich von ε-Caprolactam ableiten enthalten.

5. Thermoplastische Formmassen nach den Ansprüchen 1 bis 3, dadurch gekennzeichnet, daß die teilaromatischen Copolyamide A)
A₁) 25 - 70 Gew.-% Einheiten, die sich von Terephthalsäure und Hexamethylendiamin ableiten, und
A₃) 30 - 75 Gew.-% Einheiten, die sich von Adipinsäure und Hexamethylendiamin ableiten,
enthalten.

6. Thermoplastische Formmassen nach den Ansprüchen 1 bis 3, dadurch gekennzeichnet, daß die teilaromatischen Copolyamide A)
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
enthalten.

7. Thermoplastische Formmassen nach den Ansprüchen 1 bis 3, dadurch gekennzeichnet, daß die teilaromatischen Copolyamide A)
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten
enthalten.

8. Thermoplastische Formmassen nach den Ansprüchen 1 bis 5, in denen die Komponente A) einen Schmelzpunkt von 270°C bis 325°C aufweist.

9. Verwendung der teilaromatischen Copolyamide gemäß den Ansprüchen 1 bis 7 zur Herstellung von Folien, Fasern und Formkörpern.

10. Formkörper, erhältlich aus teilaromatischen Copolyamiden gemäß den Ansprüchen 1 bis 7.

## Claims

1. A thermoplastic molding composition containing
A) 40-99.9 % by weight of a partly aromatic and partly crystalline copolyamide having a triamine content of less than 0.5 % by weight composed of
(A₁) 20-90 % by weight of units derived from terephthalic acid and hexamethylenediamine,
(A₂) 0-50 % by weight of units derived from ε-caprolactam,
(A₃) 0-80 % by weight of units derived from adipic acid and hexamethylenediamine,
(A₄) 0-40 % by weight of further polyamide-forming monomers,
the proportion of component (A₂) or (A₃) or (A₄) or a mixture thereof being not less than 10 % by weight,
B) 0.1-2 % by weight of at least one aromatic secondary amine, and
C) 100-2000 ppm of at least one phosphorus-containing inorganic acid or a derivative thereof,
the proportion of component C) being based on the total amount of components A) and B), and also
D) 0-59.9 % by weight of a fibrous or particulate filler or a mixture thereof,
E) 0-30 % by weight of an elastomeric polymer.

2. A thermoplastic molding composition as claimed in claim 1, containing as component B) an aromatic secondary amine of the general formula I 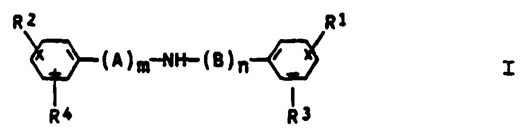 where
m and n are each 0 or 1,
A and B are each a C₁-C₄-alkyl- or phenyl-substituted tertiary carbon atom,
R¹ and R² are each hydrogen or ortho- or para-disposed C₁-C₆-alkyl which may be monosubstituted, disubstituted or trisubstituted by phenyl, halogen, carboxyl or a transition metal salt of carboxyl, and
R³ and R⁴ are each hydrogen or ortho- or para-disposed methyl when m plus n is 1 or ortho- or para-disposed tertiary C₃-C₉-alkyl which may be monosubstituted, disubstituted or trisubstituted by phenyl when m plus n is 0 or 1.

3. A thermoplastic molding composition as claimed in claim 1 or 2, wherein component C) comprises hypophosphorous acid, phosphorous acid, phosphoric acid, an alkali metal salt thereof or a mixture thereof.

4. A thermoplastic molding composition as claimed in claim 1 or 2 or 3, wherein the partly aromatic copolyamide A) contains
A₁) 50-80 % by weight of units derived from terephthalic acid and hexamethylenediamine, and
A₂) 20-50 % by weight of units derived from ε-caprolactam.

5. A thermoplastic molding composition as claimed in claim 1 or 2 or 3, wherein the partly aromatic copolyamide A) contains
A₁) 25-70 % by weight of units derived from terephthalic acid and hexamethylenediamine, and
A₃) 30-75 % by weight of units derived from adipic acid and hexamethylenediamine.

6. A thermoplastic molding composition as claimed in claim 1 or 2 or 3, wherein the partly aromatic copolyamide A) contains
A₁) 65-85 % by weight of units derived from terephthalic acid and hexamethylenediamine, and
A₄) 15-35 % by weight of units derived from isophthalic acid and hexamethylenediamine.

7. A thermoplastic molding composition as claimed in claim 1 or 2 or 3, wherein the partly aromatic copolyamide A) contains
A₁) 50-70 % by weight of units derived from terephthalic acid and hexamethylenediamine,
A₃) 10-20 % by weight of units derived from adipic acid and hexamethylenediamine, and
A₄) 20-30 % by weight of units derived from isophthalic acid and hexamethylenediamine.

8. A thermoplastic molding composition as claimed in claim 1 or 2 or 3 or 4 or 5, wherein component A) has a melting point of from 270°C to 325°C.

9. The use of the partly aromatic copolyamide of claim 1 or 2 or 3 or 4 or 5 or 6 or 7 for producing films, sheets, fibers and moldings.

10. A shaped article obtainable from a partly aromatic copolyamide as set forth in claim 1 or 2 or 3 or 4 or 5 or 6 or 7.

## Revendications

1. Masses à mouler thermoplastiques, contenant
A) 40 à 99,9% en poids d'un copolyamide partiellement aromatique et partiellement cristallin, ayant une teneur en triamine inférieure à 0,5% en poids, composé de
A₁) 20 à 90% en poids de motifs qui dérivent d'acide téréphtalique et d'hexaméthylénediamine,
A₂) 0 à 50% en poids de motifs qui dérivent d'ε-caprolactame,
A₃) 0 à 80% en poids de motifs qui dérivent d'acide adipique et d'hexaméthylénediamine,
A₄) 0 à 40% en poids d'autres monomères formant des polyamides,
la proportion des composants A₂), A₃), A₄) ou de leurs mélanges s'élevant au moins à 10% en poids,
B) 0,1 à 2% en poids d'au moins une amine secondaire aromatique,
et
c) 100 à 2000 ppm d'au moins un acide inorganique contenant du phosphore ou de dérivés de celui-ci, la teneur en composant C) se rapportant à la quantité totale des composants A) et B),
ainsi que
D) 0 à 59,9% en poids de charges fibreuses ou particulaires ou de mélanges de celles-ci,
E) 0 à 30% en poids d'un polymère ayant l'élasticité du caoutchouc.

2. Masses à mouler thermoplastiques selon la revendication 1, contenant, comme composant B), une amine secondaire aromatique de formule générale I 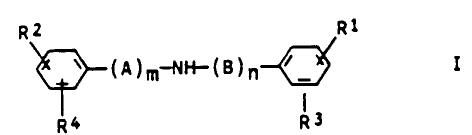 dans laquelle
m, n = 0 ou 1,
A et B = Atomes de carbone tertiaires substitués par des reste alkyle en C₁-C₄ ou phényle,
R¹, R² = Atomes d'hydrogène ou groupements alkyle en C₁-C₆ en position ortho ou para, qui peuvent être éventuellement substitués par 1 à 3 restes phényle, atomes d'halogène, groupements carboxyle ou par un sel de métal de transition de ce groupement carboxyle, et
R³, R⁴ = Atomes d'hydrogène ou restes méthyle en position ortho ou para lorsque m + n = 1, ou groupements alkyle tertiaires en C₃-C₉ en position ortho ou para, qui peuvent être éventuellement substitués par 1 à 3 restes phényle, lorsque m + n = 0 ou 1.

3. Masses à mouler thermoplastiques selon la revendication 1 ou 2, dans lesquelles le composant C) est constitué par de l'acide hypophosphoreux, de l'acide phosphoreux, de l'acide phosphorique, des sels de ceux-ci et de métaux alcalins ou de leurs mélanges.

4. Masses à mouler thermoplastiques selon l'une quelconque des revendications 1 à 3, caractérisées en ce que les copolyamides partiellement aromatiques A) contiennent
A₁) 50 à 80% en poids de motifs qui dérivent d'acide téréphtalique et d'hexaméthylènediamine et
A₂) 20 à 50% en poids de motifs qui dérivent d'ε-caprolactame.

5. Masses à mouler thermoplastiques selon l'une quelconque des revendications 1 à 3, caractérisées en ce que les copolyamides partiellement aromatiques A) contiennent
A₁) 25 à 70% en poids de motifs qui dérivent d'acide téréphtalique et d'hexaméthylénediamine et
A₃) 30 à 75% en poids de motifs qui dérivent d'acide adipique et d'hexaméthylénediamine.

6. Masses à mouler thermoplastiques selon l'une quelconque des revendications 1 à 3, caractérisées en ce que les copolyamides partiellement aromatiques A) contiennent
A₁) 65 à 85% en poids de motifs qui dérivent d'acide téréphtalique et d'hexaméthylènediamine et
A₄) 15 à 35% en poids de motifs qui dérivent d'acide isophtalique et d'hexaméthylènediamine.

7. Masses à mouler thermoplastiques selon l'une quelconque des revendications 1 à 3, caractérisées en ce que les copolyamides partiellement aromatiques A) contiennent
A₁) 50 à 70°% en poids de motifs qui dérivent d'acide téréphtalique et d'hexaméthylénediamine,
A₃) 10 à 20% en poids de motifs qui dérivent d'acide adipique et d'hexaméthylènediamine et
A₄) 20 à 30% en poids de motifs qui dérivent d'acide isophtalique et d'hexaméthylènediamine.

8. Masses à mouler thermoplastiques selon l'une quelconque des revendications 1 à 5, dans lesquelles le composant A) présente un point de fusion de 270°C à 325°C.

9. Utilisation des copolyamides partiellement aromatiques selon l'une quelconque des revendications 1 à 7 pour la fabrication de feuilles, de fibres et de corps moulés.

10. Corps moulés, obtenus à partir de copolyamides partiellement aromatiques selon l'une quelconque des revendications 1 à 7.
